# EUROPEAN PATENT APPLICATION

(11) **EP 2 578 658 A1**
(43) Date of publication of application: **10.04.2013**
(21) Application number: 11786747.3
(22) Date of filing: 27.05.2011
(51) Int. Cl.: C09K 3/10, E02B 3/16, E02B 7/02, B09B 1/00

(54) **WATER-STOP AGENT FOR WATER-IMPERVIOUS SHEET AND METHOD FOR REPAIRING WATER-IMPERVIOUS SHEET**

(30) Priority: 28.05.2010 JP 2010123565
(71) Applicant: Obayashi Corporation, Tokyo 108-8502 (JP); Dyflex Corporation, Shinjuku-ku, Tokyo 163-0825 (JP)
(72) Inventor: SHIBATA Kenji, Tokyo 108-8502 (JP); YANO Noriyoshi, Funabashi-shi Chiba 273-0027 (JP); TANIHARA Daisuke, Funabashi-shi Chiba 273-0027 (JP); SUGIYAMA Akihiro, Funabashi-shi Chiba 273-0027 (JP)
(74) Representative: Sika Patent Attorneys
(86) International application number: PCT/JP2011/062207
(87) International publication number: WO 2011/149050

(57) **Abstract**

Provided is a waterproofing agent for repairing a damaged portion of a waterproof sheet spread on the ground, the waterproofing agent being a urethane-based waterproofing agent obtained by mixing a primary agent containing an isocyanate component and a curing agent containing a caster oil-modified polyester polyol and a plasticizing agent component.

## Description

### TECHNICAL FIELD

The present invention relates to a waterproofing agent for repairing a damaged portion of a waterproof sheet spread on the ground, and to a waterproof sheet repair method that uses this waterproofing agent.
The present application claims priority on the basis of Japanese Patent Application No. 2010-123565 filed in Japan on May 28, 2010, the contents of which are incorporated herein by reference.

### BACKGROUND ART

Waterproof sheets are known to be used in waterproof structures such as industrial waste disposal sites and man-made ponds. In these waterproof structures, seepage of water into the ground can be prevented by spreading a waterproof sheet on the ground.

In these types of waterproof structures, the waterproof sheet may be damaged, and in such cases, the waterproof sheet is repaired. In general, methods used to repair waterproof sheets consist of exposing the damaged location by excavating soil and other debris from on top of the waterproof sheet, visually confirming the damaged location, and affixing a patch to that location. However, in the case of such repair methods, the bothersome work of having to excavate soil and other debris is required, thereby resulting in the problem of requiring considerable time and labor.

In order to resolve such problems, a repair method has been proposed in which a waterproof sheet is repaired by inserting a nozzle into debris on the waterproof sheet and injecting a thermoplastic repair agent towards a damaged location of the waterproof sheet (see Patent Document 1).

### [Prior Art Documents]

### [Patent Documents]

[Patent Document 1] Japanese Patent Publication No. 3673972

### SUMMARY OF THE INVENTION

### [Problems to be Solved by the Invention]

In the repair method described above, a waterproof sheet is repaired by injecting a warmed repair agent into a damaged location. In this case, in addition to requiring a mechanism for warming the repair agent, there was also the problem of difficulty in controlling the temperature of the repair agent.

With the foregoing in view, an object of the present invention is to provide a waterproofing agent for a waterproof sheet that does not require heating and can be handled easily, and a waterproof sheet repair method that uses this waterproofing agent.

### [Means for Solving the Problems]

As a result of conducting extensive studies in order to achieve the aforementioned object, the inventors of the present invention found that by mixing a primary agent containing an isocyanate component with a curing agent containing a castor oil-modified polyester polyol and a plasticizing agent component, a urethane-based waterproofing agent can be obtained that has viscosity (softness) suitable for construction work without having to be warmed.

Namely, the present invention is a urethane-based waterproofing agent for repairing a waterproof sheet, provided with a primary agent containing an isocyanate compound and a curing agent containing a castor oil-modified polyester polyol and a plasticizing agent component, wherein the primary agent and the curing agent are mixed.

In addition, the present invention is a repair method for repairing a damaged portion of a waterproof sheet spread on the ground, comprising a step for acquiring an electrical status through an electrically conductive mat arranged between layered waterproof sheets, and in the case the resulting electrical status indicates seepage, a step for injecting a urethane-based waterproofing agent, obtained by mixing a primary agent containing an isocyanate component with a curing agent containing a castor oil-modified polyester polyol and a plasticizing agent component, from the top side of the waterproof sheet and sealing the damaged portion of the waterproof sheet with the urethane-based waterproofing agent.

In the present invention, the primary agent may be a mixture of polymethylene polyphenyl polyisocyanate and 4,4'-diphenylmethane diisocyanate, and the plasticizing agent component may be diisononyl adipate.

In the present invention, the curing agent may further contain a powder.

In the present invention, the powder may be calcium carbonate.

### [Effects of the Invention]

According to the present invention, a waterproofing agent for a waterproof sheet that does not require warming and can be handled easily, and a waterproof sheet repair method that uses this waterproofing agent, can be provided.

### BRIEF DESCRIPTION OF THE DRAWINGS

FIG. 1 is a drawing for explaining incorporation of a waterproofing agent in the present embodiment.
FIG. 2 is a drawing for explaining the chemical structure of castor oil.
FIG. 3 is a drawing for explaining a urethanation reaction.
FIG. 4(a) is a drawing for schematically explaining the arrangement of a measuring electrode and a damaged location, while FIG. 4(b) is a drawing for explaining a waterproof structure for a repair test.
FIG. 5 is a drawing for explaining the contents of a test case.
FIG. 6 is a flow chart for explaining the specific procedure of a repair test.
FIG. 7 is a drawing for explaining ground preparation.
FIG. 8 is a drawing for explaining the spread status of a lower layer sheet.
FIG. 9 is a drawing for explaining the manner in which an electrically conductive mat is spread in cases 1 and 2.
FIG. 10 is a drawing for explaining the manner in which an electrically conductive mat is spread in case 3.
FIG. 11 is a drawing for explaining the manner in which an upper layer sheet is spread in cases 1 and 2.
FIG. 12 is a drawing for explaining the manner in which an upper layer sheet is spread in case 3.
FIG. 13 is a drawing for explaining the manner in which a protective mat is spread in case 3.
FIG. 14 is a drawing for explaining status following land filling and water injection in cases 1 and 2.
FIG. 15 is a drawing for explaining status following land filling and water injection in case 3.
FIG. 16 is a drawing for explaining status during injection of waterproofing agent in case 1.
FIG. 17 is a drawing for explaining status during injection of waterproofing agent in case 2.
FIG. 18 is a drawing for explaining status during injection of waterproofing agent in case 3.
FIG. 19 is a drawing for explaining changes in resistance values following injection of waterproofing agent in cases 1 and 2.
FIG. 20 is a drawing for explaining changes in resistance values following injection of waterproofing agent in case 3.
FIG. 21 is a drawing for explaining leakage current values (before injection of waterproofing agent) in cases 1 and 2.
FIG. 22 is a drawing for explaining leakage current values (1 hour after injection) in cases 1 and 2.
FIG. 23 is a drawing for explaining current leakage values (16 days after injection) in cases 1 and 2.
FIG. 24 is a drawing for explaining fill soil 16 days after injection in cases 1 and 2.
FIG. 25 is a drawing for explaining fill soil solidified by a waterproofing agent of formula A.
FIG. 26 is a drawing for explaining a waterproof sheet following removal of solidified fill soil.
FIG. 27 is a drawing for explaining an electrically conductive mat at a portion corresponding to a damaged location.
FIG. 28 is a drawing for explaining fill soil solidified by a waterproofing agent of formula B.
FIG. 29 is a drawing for explaining fill soil 16 days after injection in case 3.
FIG. 30 is a drawing for explaining the back side of a non-woven fabric that composes a protective mat.
FIG. 31 is a drawing for explaining the front side of a waterproof sheet.
FIG. 32 is a drawing for explaining an electrically conductive mat at a portion corresponding to a damaged location.
FIG. 33 is a drawing for schematically explaining a method for repairing a damaged location of a waterproof sheet located below a permanent fixture.

### EMBODIMENTS OF THE INVENTION

The following provides an explanation of embodiments of the present invention.

### <Waterproofing Agent>

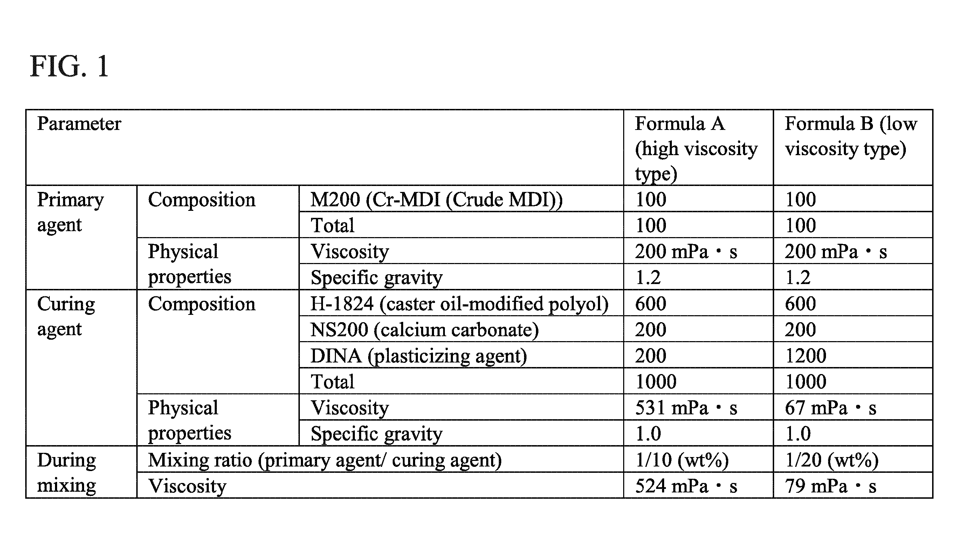

First, an explanation is provided of a waterproofing agent for repairing a damaged location of a waterproof sheet. The waterproofing agent used in the present embodiment is a urethane-based waterproofing agent obtained by mixing a primary agent containing an isocyanate component with a curing agent containing a polyol component and a plasticizing agent component. More specifically, waterproofing agents are used that were prepared according to the composition of formula A and the composition of formula B shown in FIG. 1.

Crude MDI, and more specifically, Cosmonate M-200 (trade name), manufactured by Mitsui Chemicals Polyurethanes Inc., is used for the primary agent. This M-200 is a mixture of polymethylene polyphenyl polyisocyanate (PMDI) and 4,4'-diphenylmethane diisocyanate (MDI), and contains polymethylene polyphenyl polyisocyanate at a ratio of 60% to 70% and 4,4'-diphenylmethane diisocyanate as the remainder (40% to 30%). This primary agent has a viscosity of 200 mPa • s and a specific gravity of 1.2, and is contained at 100 parts by weight in both formula A and formula B.

A mixture of a polyol component, a powder and a plasticizing agent component is used for the curing agent. The polyol component undergoes a urethanation reaction with the primary agent, the powder serves to enhance the specific gravity of the chemical agents and increase their amount, and the plasticizing agent component is for lowering the viscosity of the chemical agents.

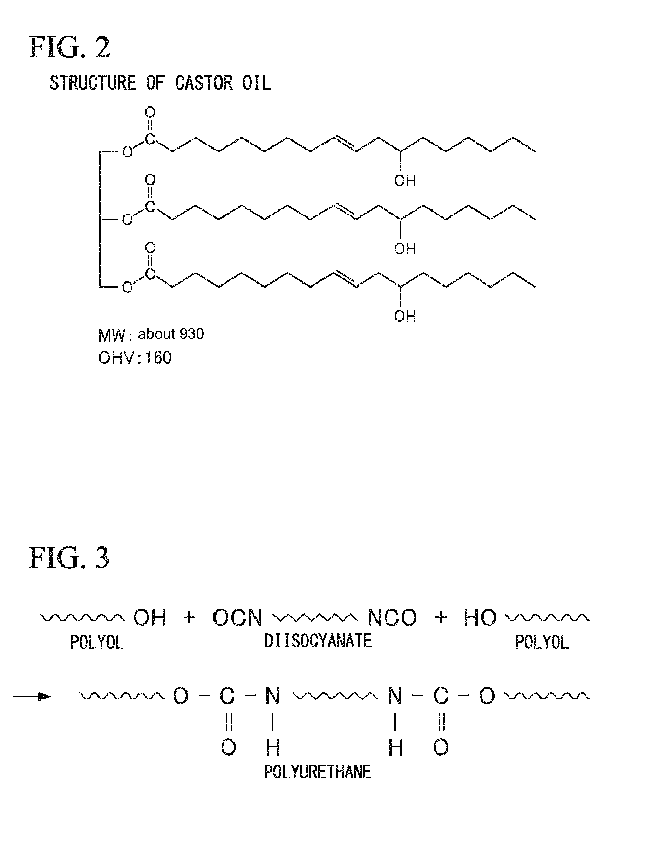

The present embodiment is characterized by the use of a castor oil-modified polyester polyol (to also be simply referred to as castor oil) for the polyol component. The following provides an explanation of castor oil. Castor oil is obtained from the seeds of plant known as a castor oil plant, and is an ester of fatty acids and glycerin having the structure shown in FIG. 2. Castor oil is characterized by the majority (about 90%) of the fatty acids consisting of ricinoleic acid.

As shown in FIG. 3, castor oil undergoes a urethanation reaction with isocyanate compounds. Caster oil-based polyurethanes produced by this urethanation reaction are characterized by having water resistance and electrical insulating properties that are superior to polypropylene glycol, polyesters and polybutadiene-based polyurethanes as well as low viscosity. Consequently, they are characterized by having satisfactory injectability when used to repair waterproof sheets, and have a high degree of waterproofing after solidifying.

In the example shown in FIG. 1, URIC castor oil (trade name) manufactured by Itoh Oil Chemicals Co., Ltd. (product no.: H-1824) is used for the castor oil, and 600 parts by weight are contained in the chemical agent in both formula A and formula B. This H-1824 castor oil has an acid value of 2.3 mg KOH/g, a hydroxyl value of 68 mg KOH/g, viscosity of 1000 mPa • s and a functional group number of 2.3.

In the present embodiment, calcium carbonate is used for the powder. More specifically, NS200 (trade name) manufactured by Nitto Funka Kogyo Co., Ltd. was used for the powder. This calcium carbonate is contained at 200 parts by weight in the chemical agent in both formula A and formula B.

Furthermore, a powder other than calcium carbonate can be used for the powder provided it can be incorporated in urethane. Examples of powders that can be used include carbon black, clay, talc, silica, titanium oxide, unslaked lime, kaolin, zeolite, diatomaceous earth, aluminum sulfate, barium sulfate and bentonite, and these can be used alone or as a mixture thereof.

In the present embodiment, diisononyl adipate (DINA) manufactured by Taoka Chemical Co., Ltd. is used for the plasticizing agent component. The reason for selecting diisononyl adipate for the plasticizing agent component is that it is highly compatible with the curing agent (Crude MDI: M-200) and is resistant to reacting with the curing agent. There is a difference in the contents of this plasticizing agent in the chemical agent between formula A and formula B. Namely, this plasticizing agent component is contained at 200 parts by weight in formula A and at 1200 parts by weight in formula B.

Furthermore, although this plasticizing agent component can also be added to the primary agent, it is added to the curing agent in the present embodiment. This is to avoid a situation in which moisture contained in the plasticizing agent component ends up reacting with the Crude MDI composing the primary agent.

In addition, there are numerous types of plasticizing agents, including phthalic acid esters, adipic acid esters, phosphoric acid esters and trimellitic acid esters, and a plasticizing agent other than diisononyl adipate can be used. For example, typical plasticizing agents such as diethylhexyl phthalate (DOP), diisononyl phthalate (DINP) or dioctyl adipate (DOA) can also be used.

The curing agent of formula A has a viscosity of 67 mPa • s and specific gravity of 1.0, while the curing agent of formula B has a specific gravity of 67 mPa • s and viscosity of 1.0. The mixing ratio of the primary agent to the curing agent in the waterproofing agent of formula A is 1/10. Namely, 100 parts by weight of the primary agent are mixed with 1000 parts by weight of the curing agent. In addition, the mixing ratio of the primary agent to the curing agent in the waterproofing agent of formula A is 1/20. Namely, 100 parts by weight of the primary agent are mixed with 2000 parts by weight of the curing agent. The viscosity of the waterproofing agent of formula A at normal temperatures immediately after mixing is 524 mPa • s, while the viscosity of the waterproofing agent of formula B at normal temperatures is 79 mPa • s.

### <Waterproof Sheet Repair Test>

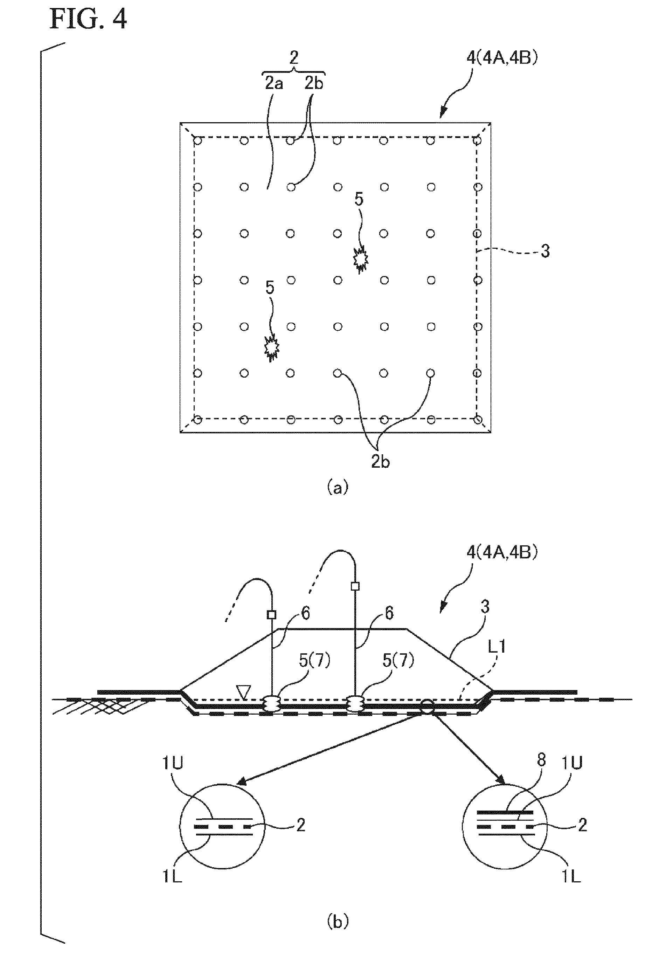

Next, an explanation is provided of a waterproof sheet repair test using the aforementioned waterproofing agents (formula A and formula B). In this repair test, as shown in FIG. 4, two waterproof sheets 1U and 1L are layered with an electrically conductive mat 2 positioned there between. Test fill soil 3 is placed on the waterproof sheet 1U to obtain a test yard 4.

Two test yards 4 were prepared. One of the test yards was used for Case 1 and Case 2, while the other test yard was used for Case 3. For the sake of convenience, in the following explanations, the test yard used for Cases 1 and 2 is referred to as test yard 4A, while the test yard used for Case 3 is referred to as test yard 4B.

Subsequently, water was injected into each of the test yards 4A and 4B, and water was allowed to seep from a defect 5 provided in advance in the upper layer waterproof sheet 1U on top. After inserting a rod 6 into the fill soil 3 from above the defect 5, a waterproofing agent 7 was injected into the defect 5 from the distal end of the rod 6. Whether or not the defect 5 was sealed with the waterproofing agent 7 was confirmed through the electrically conductive mat 2 arranged between the waterproof sheets 1. The following provides a detailed description thereof.

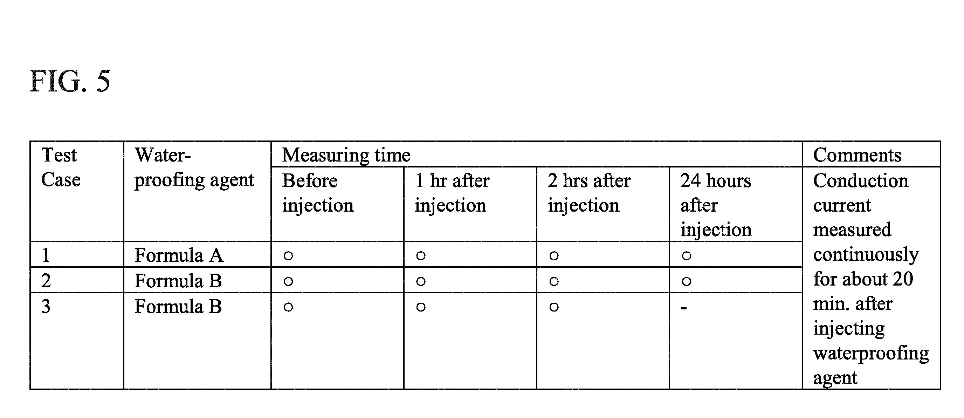

As shown in FIG. 5, in this repair test, testing was carried out for three types of cases. In Cases 1 and 2, the defect 5 was present at two locations in the test yard 4A. In addition, in Case 3, the defect 5 was present at one location in the test yard 4B, and was located roughly in the center. Thus, the defects 5 targeted for repair are provided at a total of 3 locations. Furthermore, with respect to case 3, as shown in the enlarged view in the lower left cornet of FIG. 4(b), a structure is employed in which a protective mat 8 is further spread over the upper surface of the upper layer waterproof sheet 1U, thus having a different structure from that of Cases 1 and 2.

In Cases 1 and 2, leakage current values are measured with a detection system that electrically detects locations of water seepage, and this measurement was used to verify whether it was possible to confirm completion of repairs. In addition, in Case 3, one electrode each was arranged on the side of the upper layer protective sheet 1U and the side of the lower layer protective sheet 1D, conduction current was measured after injecting the waterproofing agent 7 to verify whether or not completion of repair can be confirmed even in the case the protective mat 8 is interposed between the protective sheet 1 and the soil.

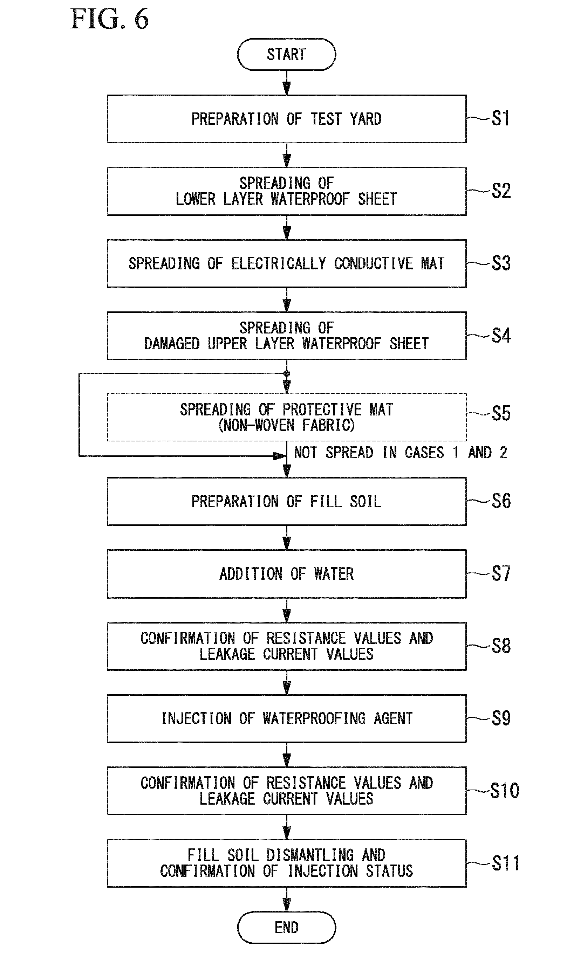

FIG. 6 is a flow chart for explaining the specific procedure in a repair test of the waterproof sheet 1. The following provides an explanation of the specific procedure of the repair test in accordance with this flow chart.

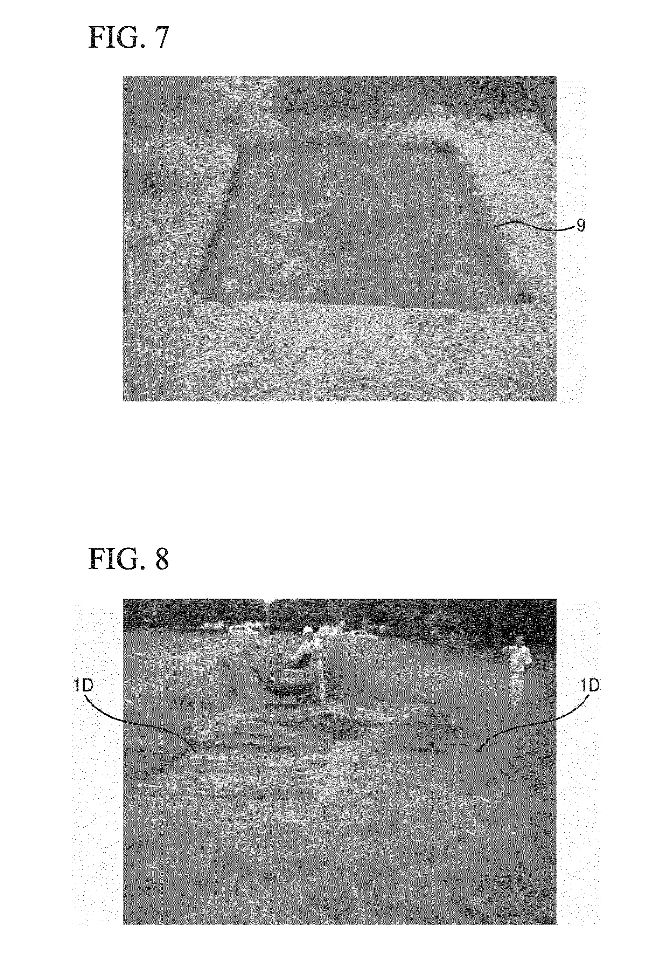

In this repair test, the test yard 4 is first prepared (S1). Here, as shown in FIG. 7, after removing weeds from the ground surface, a shallow depression 9 having a roughly square shape when viewed from overhead is formed in the ground. For example, the depression 9 is formed in the shape of a square measuring 1 m on a side and having a depth of 0. 1 m. Furthermore, two of these depressions 9 are formed respectively corresponding to the two test yards 4A and 4B.

Once the depression 9 has been formed, the lower layer waterproof sheet 1D is spread out so as to cover the depression 9 (S2). Namely, as shown in FIG. 8, a square plastic sheet of a size that is slightly larger than the external shape of the depression 9 is spread over the depression 9. This lower layer waterproof sheet 1D is respectively spread over the depression 9 for the test yard 4A and the depression 9 for the test yard 4B.

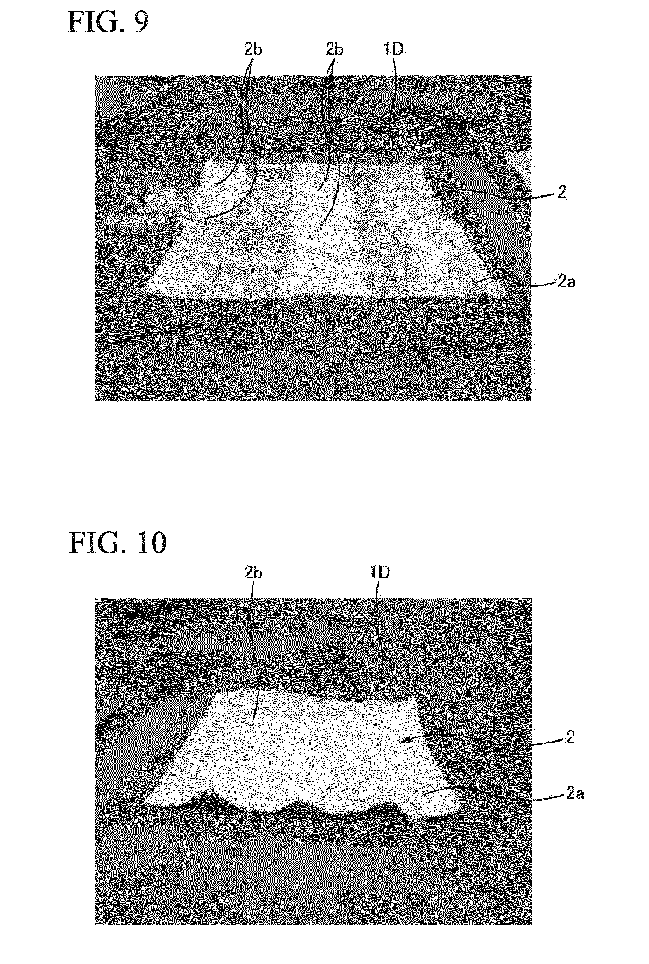

Once the lower layer waterproof sheet 1D has been spread, the electrically conductive mat 2 is spread out (S3). The electrically conductive mat 2 has electrodes attached to a rectangular non-woven fabric 2a. Two types of electrodes are provided consisting of measuring electrodes 2a and current electrodes. The measuring electrodes 2b are electrodes for measuring resistance values, and in the electrically conductive mat 2 used for Cases 1 and 2, a large number of the measuring electrodes 2b are arranged at intervals in the planar direction on the upper surface of the non-woven fabric 2a as shown in FIGS. 4 and 9. More specifically, the measuring electrodes 2b are arranged in the manner of grid points. In addition, as shown in FIG. 10, a single measuring electrode 2b is arranged on the upper surface of the non-woven fabric 2a in the electrically conductive mat 2 used for Case 3. The current electrodes are for allowing the flow of current. In this repair test, the current electrodes for Cases 1 and 2 and the current electrodes for Case 3 are all arranged on the upper surface of the upper layer waterproof sheet 1U. Consequently, they are not shown in the drawings.

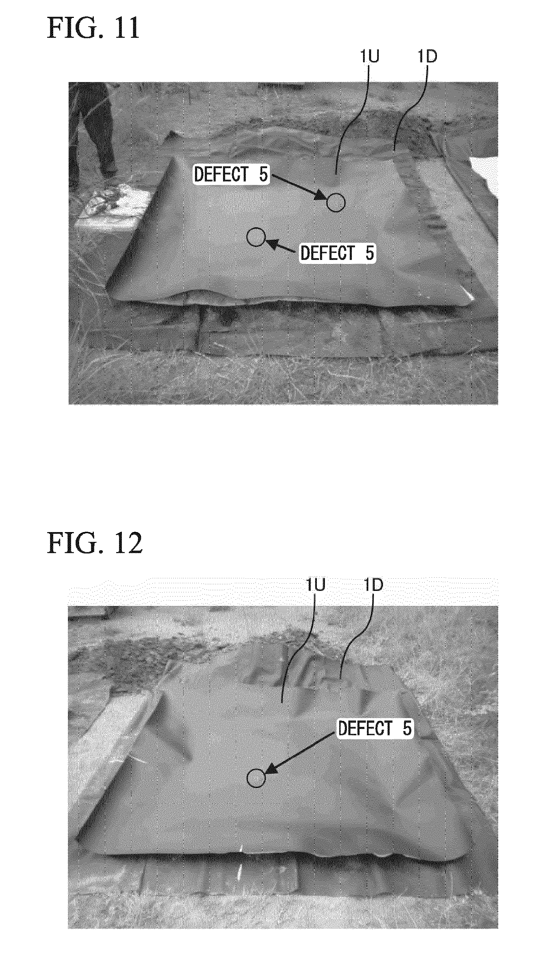

Once the electrically conductive mat 2 has been spread out, the upper layer waterproof sheet 1U is spread over this electrically conductive mat 2 (S4). The upper layer waterproof sheet 1U used here has been damaged in advance. The defects 5 are, for example, L-shaped cuts measuring 3 cm x 3 cm. There are two defects 5 in the upper layer waterproof sheet 1U for Cases 1 and 2 as shown in FIGS. 4 and 11. In addition, there is a single defect 5 near the center of the sheet in the upper layer waterproof sheet 1U for Case 3 as shown in FIG. 12.

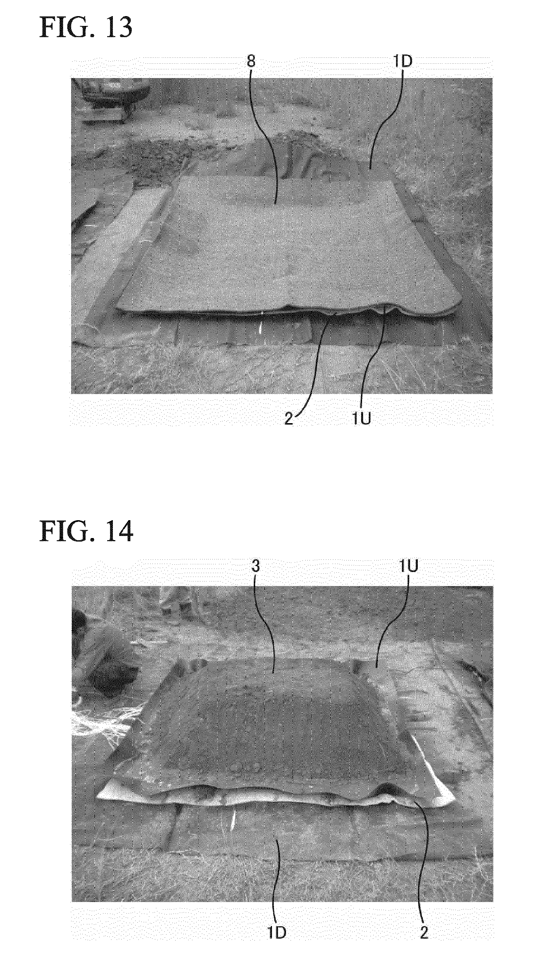

Once the upper layer waterproof sheet 1U has been spread out, the protective mat 8 is spread out only for the test yard 4B for Case 3 (S5). As shown in FIG. 13, this protective mat 8 is composed of a thick, non-woven fabric, and has a rectangular shape that is slightly smaller than the lower layer waterproof sheet 1D and roughly the same size as the upper layer waterproof sheet 1U and the electrically conductive mat 2.

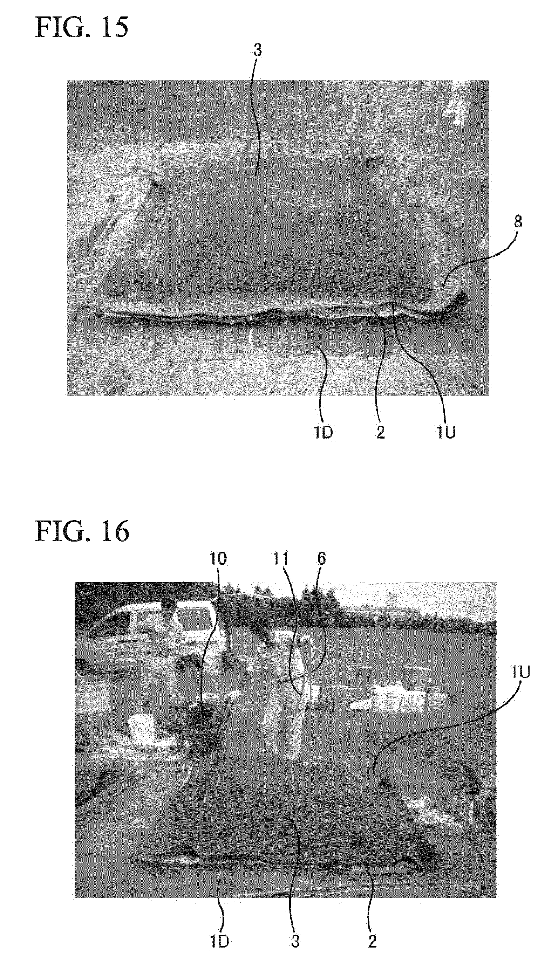

Next, the fill soil 3 is prepared (S6). The fill soil 3 is respectively prepared on the upper layer waterproof sheet 1U with respect to the test yard 4A and on the protective mat 8 with respect to the test yard 4B. The fill soil 3 of the test yard 4A is shown in FIG. 14, while the fill soil 3 of the test yard 4B is shown in FIG. 15. As shown in these drawings, the fill soil 3 is in the shape of a square truncated pyramid in which the shape of the bottom surface is roughly square in the same manner as the depression 9.

Once the fill soil 3 has been prepared, water is added (S7) and resistance values and the like are confirmed (S8). Addition of water is carried out by injecting water into the fill soil 3 to the level indicated by the dotted line of reference symbol L1 shown in FIG. 4(b), or in other words, to about the same level as the level of the ground. Resistance values are confirmed by measuring conduction current flowing between the measuring electrode 2b and the current electrodes. Namely, resistance values are calculated by dividing E (voltage required for current conduction) by I (conduction current). Consequently, during measurement, a power supply (not shown) connected between the measuring electrodes 2b and the current electrodes is operated, the voltage applied between these electrodes is adjusted, and the conduction current flowing between the electrodes is measured with an ammeter.

In this repair test, since the defects 5 are provided in the upper layer waterproof sheet 1U, water penetrates to the electrically conductive mat 2 through the defects 5, and the measuring electrodes 2b and current electrodes are connected electrically (namely, leakage current flows). With respect to the test yard 4A, since a plurality of measuring electrodes 2b are arranged therein, the location where seepage is occurring (namely, the locations of the defects 5) can be detected by measuring leakage current values for each measuring electrode 2b.

Once resistance values and the like have been confirmed, the waterproofing agent 7 is injected (S9). When injecting the waterproofing agent 7, an insertion hole for inserting the rod 6 is first formed extending vertically downward from the upper surface of the fill soil 3. As shown in FIGS. 16 to 18, the rod 6 is then inserted into the insertion hole, and the lower end of the rod 6 (nozzle for the waterproofing agent 7) is positioned directly above the defect 5. Once the rod 6 has been inserted, the pump 10 is operated and the waterproofing agent 7 is pumped in. Furthermore, the primary agent and the curing agent are mixed immediately prior to injection of the waterproofing agent 7. In addition, mixing work and injection work are carried out at normal temperatures.

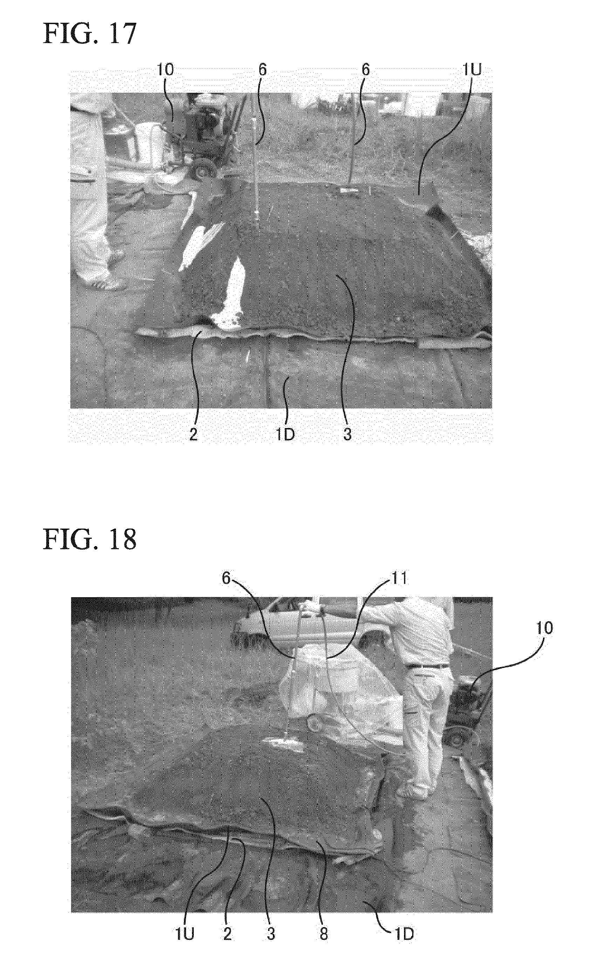

In this repair test, with respect to Case 1, the waterproofing agent 7 is injected for one of the defects 5 in the test yard 4A as shown in FIG. 16. In addition, with respect to Case 2, the waterproofing agent 7 is injected for the other defect 5 in the test yard 4A as shown in FIG. 17. Namely, the waterproofing agent 7 of formula A is injected for one of the defects 5, while the waterproofing agent 7 of formula B is injected for the other defect 5. Moreover, with respect to Case 3, the waterproofing agent 7 is injected for the defect 5 of the test yard 4B as shown in FIG. 18.

The waterproofing agent 7 that has been pumped with the pump 10 is injected through a tube 11 (see FIGS. 16 and 18), passed through the internal space of the rod 6 from the upper end of the rod 6, and injected into the fill soil 3 from the lower end of the rod 6. The injected waterproofing agent 7 penetrates the fill soil 3 and reaches the defect 5.

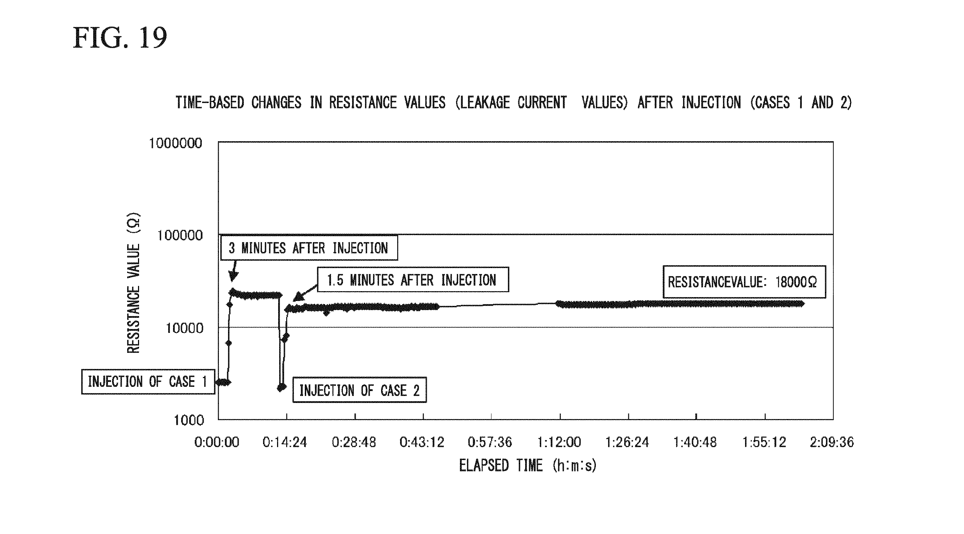

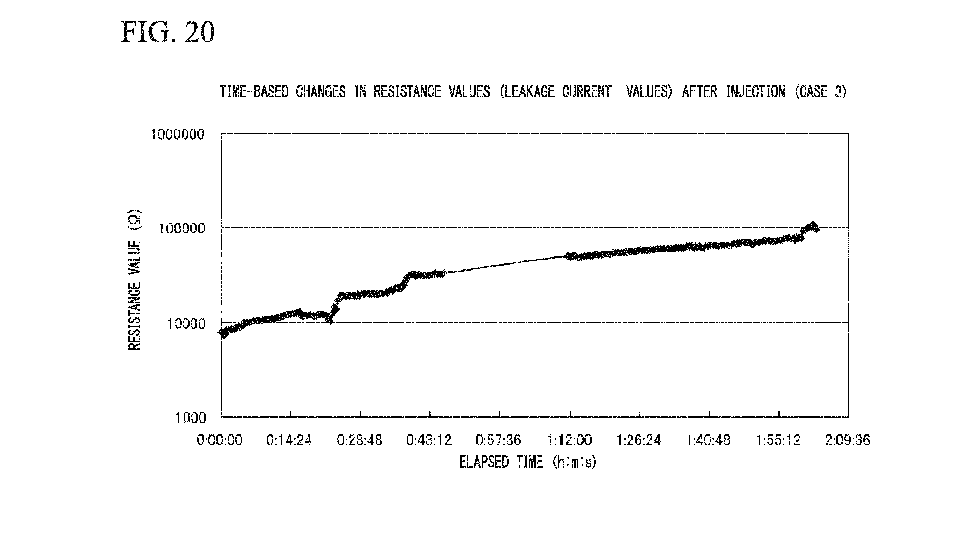

Once the waterproofing agent 7 has been injected, resistance values and the like are confirmed (S10). This confirmation procedure is carried out in the same manner as the confirmation procedure of step S8. Here, FIG. 19 is a drawing for explaining changes in resistance values following injection of the waterproofing agent 7 in Cases 1 and 2. In addition, FIG. 20 is a drawing for explaining changes in resistance values following injection of the waterproofing agent 7 in Case 3.

In Case 1, the resistance value rapidly increased from 2500 Ω immediately after injecting the waterproofing agent 7 of formula A, and reached 24000 Ω 3 minutes after injection. Although the resistance value subsequently decreased slightly, it stabilized at about 22000 Ω.

In Case 2, the resistance value rapidly decreased to about 2200 Ω immediately after injecting the waterproofing agent 7 of formula B. However, similar to injection of the waterproofing agent 7 in Case 1, the resistance value immediately began to increase rapidly, reaching about 16000 Ω 1.5 minutes after injection in Case 2. The resistance value subsequently stabilized at 18000 Ω.

Furthermore, the rapid decrease in the resistance value that occurred immediately after injection of the waterproofing agent 7 in Case 2 is thought to have been caused by an increase in size of the defect 5 of Case 2 due to injection pressure as a result of the pressure applied during injection. Namely, the resistance value was thought to have increased over time since a larger defect 5 was sealed by the waterproofing agent 7 of Case 2.

Furthermore, in the repair tests of Case 1 and Case 2, electrical resistance values were lower than in the repair test of Case 3. This was determined to be the result of one of the measuring electrodes 2b having moved directly beneath the defect 5 at the stage of preparing the fill soil 3, thereby obstructing closure of the defect 5.

When the waterproofing agent 7 of formula B was injected in Case 3, the resistance value gradually increased from 10000 Ω, and reached 100000 Ω after 2 hours had passed since injection of the waterproofing agent 7. The reason for this increase in the resistance value is thought to be the result of the defect 5 being sealed as the waterproofing agent 7 gradually penetrated to the defect 5 in the waterproof sheet 1, thereby inhibiting the flow of current.

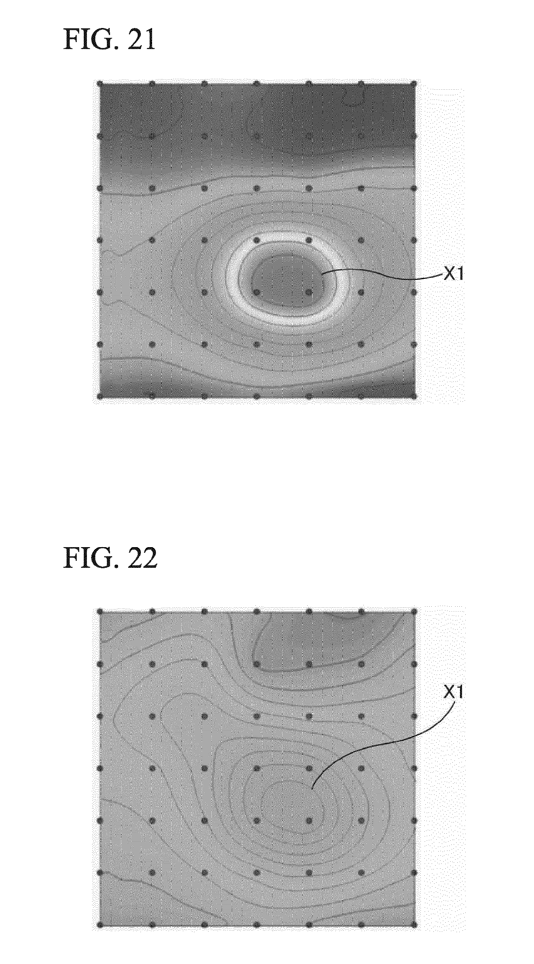

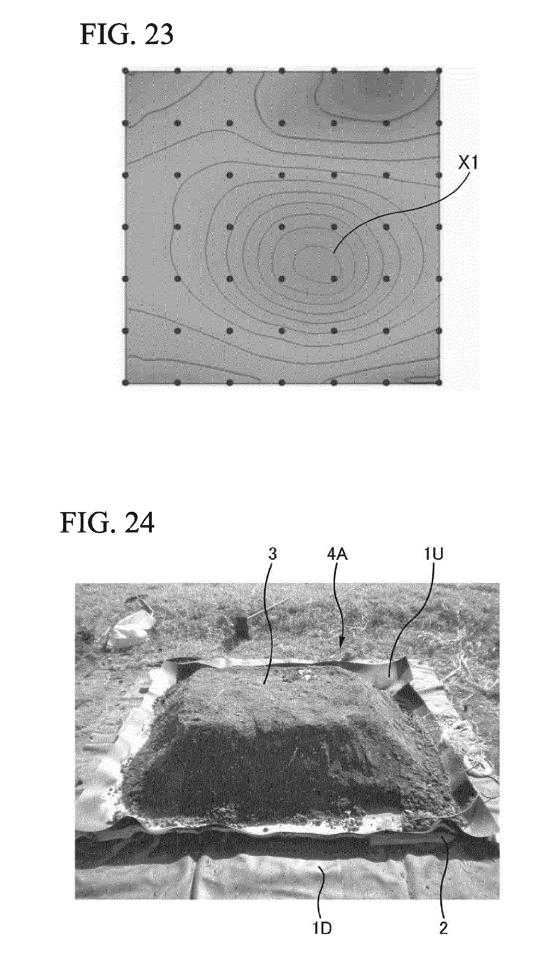

In addition, leakage current values were measured for each measuring electrode 2b in Cases 1 and 2. FIG. 21 is a drawing for explaining leakage current values prior to injection of waterproofing agent as measured in step S8. FIG 22 is a drawing for explaining leakage current values 1 hour after injection. FIG. 23 is a drawing for explaining leakage current values 16 days after injection.

The defect 5 indicated with reference symbol X1 in FIG. 21 is depicted as being darker than its surrounding area. As a result, the measuring electrodes 2b and the current electrodes were electrically connected and leakage current was confirmed to be flowing prior to injection of the waterproofing agent 7. Furthermore, although there are areas that are darker than the defect 5X1 along the periphery, these peripheral areas indicate a lower level of leakage current.

In FIGS. 22 and 23, the defect 5X1 is depicted as having the same darkness as surrounding areas. This means that leakage current in this area is roughly equal to that of the surrounding areas. Namely, this means that the defect 5X1 was sealed by the waterproofing agent 7. Thus, this demonstrates that completion of repair of the waterproof sheet 1 can be confirmed from the distribution of leakage current values.

Once resistance values and leakage current values have been confirmed, the injection status of the waterproofing agent 7 is confirmed (S11). This confirmation procedure was carried out by removing the fill soil 3 after 16 days had passed since injection of the waterproofing agent 7.

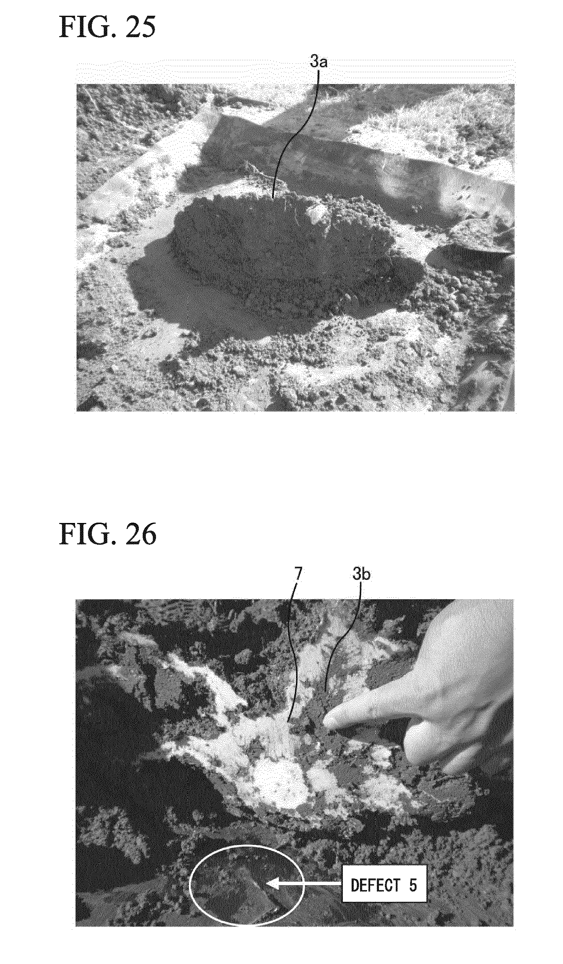

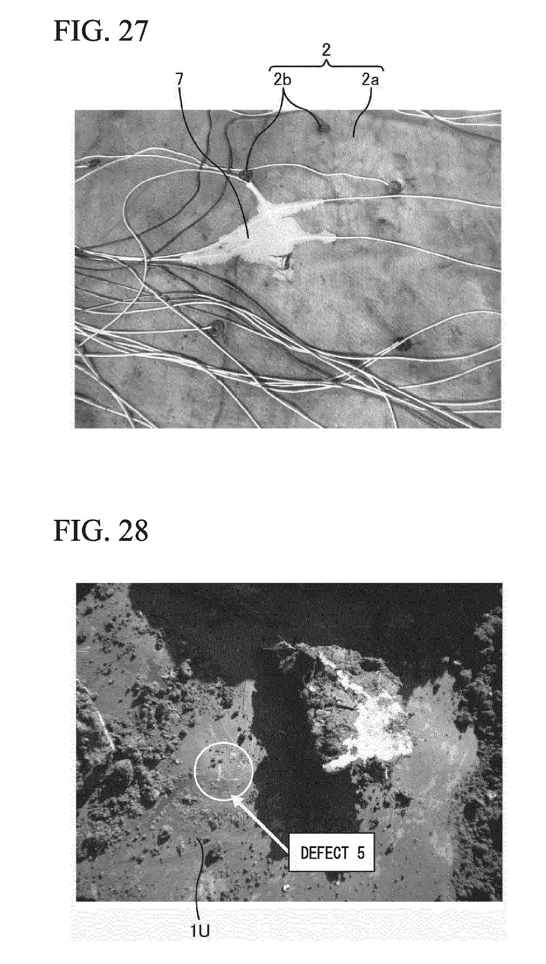

The fill soil 3 in the test yard 4A was dismantled as shown in FIG. 24. The fill soil 3 was able to be confirmed to have been solidified by the waterproofing agent 7 of formula A as a result this dismantling as shown in FIG. 25. When the solidified fill soil 3b was lifted up, the defect 5 in the upper layer waterproof sheet 1U was able to be confirmed beneath the fill soil 3 as shown in FIG. 26. In addition, adhesion of the waterproofing agent 7 to the electrically conductive mat 2 located below the defect 5 was able to be confirmed as shown in FIG. 27. Moreover, the waterproofing agent 7 was able to be confirmed have filled the defect 5 of the upper layer waterproof sheet 1U as shown in FIG. 28.

On the basis of these findings, the waterproofing agent 7 was able to be confirmed to have entered the defect 5 of the upper layer waterproof sheet 1U and repaired the defect 5 in the test yard 4A. Namely, the waterproofing agent 7 that filled the defect 5 was able to be confirmed to have reached the electrically conductive mat 2 and sealed the defect 5.

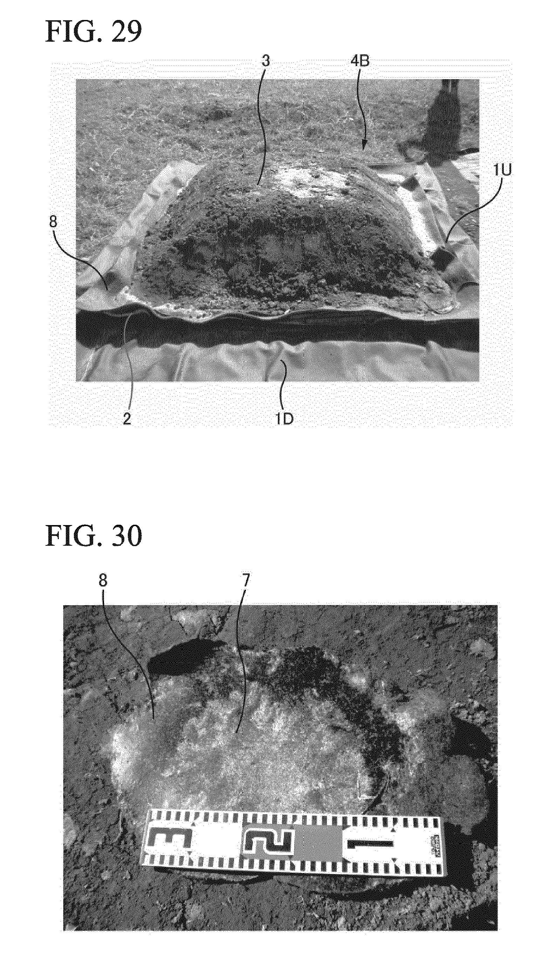

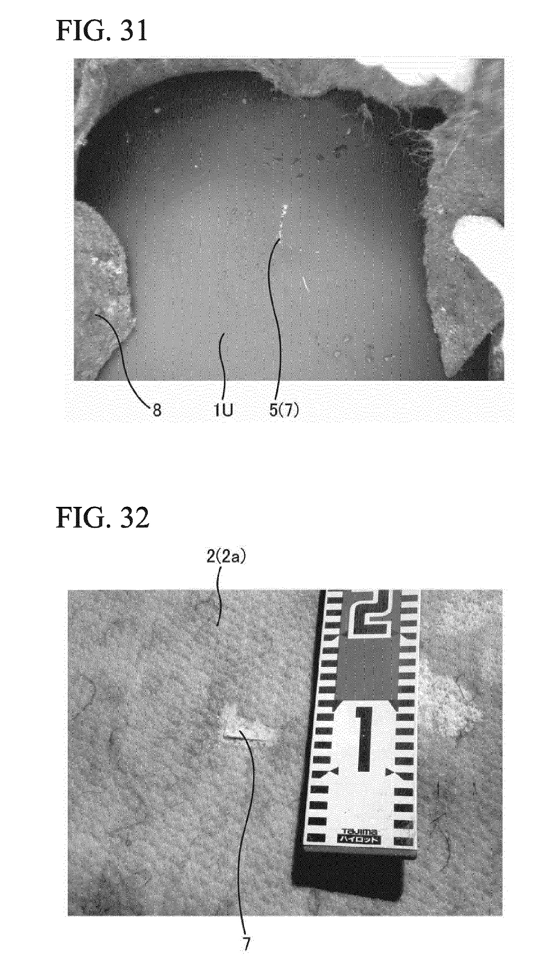

The fill soil 3 in the test yard 4B was dismantled as shown in FIG. 29. The waterproofing agent 7 was able to be confirmed to have penetrated to the back side of the protective mat 8 as a result of this dismantling as shown in FIG. 30. In addition, the waterproofing agent 7 was able to be confirmed to have penetrated inside the defect 5 of the upper layer waterproof sheet 1U as shown in FIG. 31. Moreover, the waterproofing agent 7 that had passed through the defect 5 was able to be confirmed to have reached the electrically conductive mat 2 as shown in FIG. 32.

On the basis of these findings, the waterproofing agent 7 was able to be confirmed to have sealed the defect 5 in the upper layer waterproof sheet 1U and reached the electrically conductive mat 2 in the test yard 4B. Namely, the defect 5 in the waterproof sheet 1 was able to be confirmed to be able to be sealed even if the protective mat 8 is interposed between the protective sheet 1U and the fill soil 3.

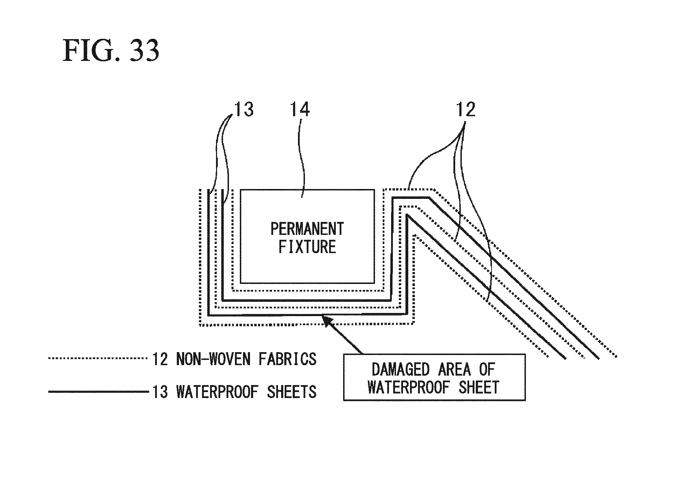

In this manner, the waterproofing agent 7 of the present embodiment has the property of sealing the defect 5 by penetrating into the protective mat 8 composed of a non-woven fabric. Consequently, as shown in FIG. 33, in a waterproof structure in which the sides and bottom of a permanent fixture 14 are covered with layered sheets consisting of non-woven fabrics 12 and waterproof sheets 13, even if a defect occurs in one of the waterproof sheets 13, the waterproofing agent 7 is able to pass through the non-woven fabrics 12 and reach the defect. As a result, defects can be repaired without having to remove or excavate the permanent fixture 14.

### <Summary>

As has been previously explained, since the present embodiment uses a urethane-based waterproofing agent obtained by mixing a primary agent containing an isocyanate component and a curing agent containing a castor oil-modified polyester polyol and a plasticizing agent component, the viscosity of the waterproofing agent does not become excessively high even at normal temperatures, and the waterproofing agent can be used to repair a waterproof sheet. As a result, handling is facilitated without requiring warming.

In addition, since the waterproof sheet repair method of the present embodiment includes a step (S8) for acquiring an electrical status through the electrically conductive mat 2 arranged between the layered waterproof sheets 1U and 1D, and a step (S9) for injecting the urethane-based waterproofing agent 7, obtained by mixing a primary agent containing an isocyanate component and a curing agent containing a castor oil-modified polyester polyol and a plasticizing agent component, from the top side of the upper layer waterproof sheet 1U, and sealing the defect 5 in the upper layer waterproof sheet 1U with the waterproofing agent 7, the viscosity of the waterproofing agent 7 again does not become excessively high even at normal temperatures, and the waterproofing agent 7 can be used to repair the waterproof sheet.

In addition, since the urethane-based waterproofing agent of the present embodiment uses a mixture of polymethylene polyphenyl polyisocyanate and 4,4'-diphenylmethane diisocyanate for the primary agent and diisononyl adipate for the plasticizing agent component, the viscosity of the waterproofing agent can be held to a low level even at normal temperatures.

In addition, since the urethane-based waterproofing agent of the present embodiment contains a powder in the curing agent, the specific gravity of the waterproofing agent can be enhanced. As a result, the waterproofing agent is able to rapidly reach the defect 5.

Furthermore, the embodiment as explained above is intended to facilitate understanding of the present invention, and the present invention is not limited by this embodiment. The present invention can be altered or modified within a range that does not deviate from the purport thereof.

For example, a waterproof structure may be an industrial waste disposal site or a man-made pond.

In addition, the powder may be excluded from the curing agent provided the waterproofing agent has sufficient specific gravity.

### INDUSTRIAL APPLICABILITY

The present invention relates to a waterproofing agent for a waterproof sheet that can be handled easily and does not require warming, and to a waterproof sheet repair method that uses this waterproofing agent.

### BRIEF DESCRIPTION OF THE REFERENCE SYMBOLS

- 1U: Upper layer waterproof sheet
- 1L: Lower layer waterproof sheet
- 2: Electrically conductive mat
- 2a: Non-woven fabric
- 2b: Measuring electrode
- 3: Fill soil
- 4A,4B: Test yard
- 5: Defect
- 6: Rod
- 7: Waterproofing agent
- 8: Protective mat
- 9: Depression
- 10: Pump
- 11: Tube
- 12: Non-woven fabric
- 13: Waterproof sheet
- 14: Permanent fixture

## Claims

1. A urethane-based waterproofing agent used to repair a waterproof sheet, comprising:
a primary agent containing an isocyanate component, and
a curing agent containing a caster oil-modified polyester polyol and a plasticizing agent component; wherein,
the primary agent and the curing agent are mixed.

2. The waterproofing agent for a waterproof sheet according to claim 1, wherein
the primary agent is a mixture of polymethylene polyphenyl polyisocyanate and 4,4'-diphenylmethane diisocyanate, and
the plasticizing agent component is diisononyl adipate.

3. The waterproofing agent for a waterproof sheet according to claim 1 or 2, wherein the curing agent further contains a powder.

4. The waterproofing agent for a waterproof sheet according to claim 3, wherein the powder is calcium carbonate.

5. A repair method for repairing a damaged portion of a waterproof sheet spread on the ground, comprising:
a step for acquiring an electrical status through an electrically conductive mat arranged between layered waterproof sheets, and
in the case the resulting electrical status indicates seepage, a step for injecting a urethane-based waterproofing agent, obtained by mixing a primary agent containing an isocyanate component with a curing agent containing a castor oil-modified polyester polyol and a plasticizing agent component, from the top side of the waterproof sheet and sealing the damaged portion of the waterproof sheet with the urethane-based waterproofing agent.
